# EUROPÄISCHE PATENTSCHRIFT

(11) **EP 3 118 497 B1**
(45) Veröffentlichungstag und Bekanntmachung des Hinweises auf die Patenterteilung: **27.06.2018**
(21) Anmeldenummer: 16178139.8
(22) Anmeldetag: 06.07.2016
(51) Int. Cl.: F16K 11/07

(54) **HYDRAULISCHES WEGEVENTIL**
HYDRAULIC DIRECTIONAL VALVE
DISTRIBUTEUR HYDRAULIQUE

(30) Priorität: 14.07.2015 DE 102015111412; 21.03.2016 DE 102016105203
(43) Veröffentlichungstag der Anmeldung: 18.01.2017
(73) Patentinhaber: Hilite Germany GmbH, 97828 Marktheidenfeld (DE)
(72) Erfinder: Hertwig, Christian, 38835 Osterwieck (DE); Klotz, Stefan, 72631 Aichtal (DE); Widmann, Johannes, 73760 Ostfiltern (DE)

(56) Entgegenhaltungen:
- WO-A1-90/07063
- DE-A1-102009 008 056
- JP-U- S6 099 365
- US-A- 3 324 890
- US-A- 4 941 508

## Beschreibung

### Technisches Gebiet

Die Erfindung betrifft ein hydraulisches Wegeventil.

### Stand der Technik

In einem gemäß dem Stand der Technik aufgebauten hydraulischen Wegeventil treten aufgrund des geregelten Fluidstromes durch Öffnen und Schließen von Steuerkanten unerwünschte Strömungskräfte an einem in einem Ventilgehäuse des Wegeventils axial verschiebbaren Kolben des Wegeventils auf, die das Gleichgewicht zwischen einer Magnetkraft und einer Federkraft einer Verschiebevorrichtung des Wegeventils stören und beeinflussen. Größen und Richtungen der Strömungskräfte sind abhängig von einer durchströmten Geometrie des Wegeventils, einer Kolbenposition des Kolbens, einer so genannten Unterdeckung der Steuerkanten und von einer Größe eines an einem Versorgungsanschluss des Wegeventils anliegenden Versorgungsdruckes. Die durchströmte Geometrie des Wegeventils ist konstant, wobei die Kolbenposition und der Versorgungsdruck variabel sind.
Ein durch die Strömungskräfte hervorgerufener Störfaktor im Kräftegleichgewicht zwischen der Magnetkraft und der Federkraft, ein so genanntes Magnet-Feder-Kräftegleichgewicht, variiert hauptsächlich in seiner Größe in Abhängigkeit des anliegenden Versorgungsdruckes. Je nach Größe des Störfaktors ändert sich ein Gesamtkräftegleichgewicht zwischen den Magnet-, den Feder- und den Strömungskräften. Dies führt zu Verschiebungen eines bestimmten Volumenstromes, welcher bei einer bestimmten Stromstärke, die an einem in Form eines Magnetaktors ausgebildeten Teils der Verschiebevorrichtung anzulegen ist, ausgebildet sein sollte. Mit anderen Worten bedeutet das, dass bei einer bestimmten Stromstärke der Volumenstrom variiert.

Anwendungsbedingt sollten die Funktionskriterien, insbesondere das Volumenstrom-Strom-Verhältnis (Q-I), so konstant wie möglich über sämtliche Betriebsbereiche des Wegeventils bleiben. Zu starke Änderungen im hydraulischen System können durch die elektronische Steuerung nicht kompensiert werden und führen gegebenenfalls sogar zu Fehlfunktionen.

Der Einfluss von Strömungskräften auf das Magnet-Feder-Kräftegleichgewicht und die Versorgungsdruckabhängigkeit der Größe der Strömungskräfte ist demnach problematisch.

Ein hydraulisches Ventil ist beispielsweise aus der JP S60 099365 U bekannt. Dieses weist einen Kolben mit einer Steuernut auf, welche in ihrem einen Endbereich zur Verringerung des Einflusses der Strömungskraft mehreren umlaufenden Stufen aufweist, mittels welchen eine stufenweise Öffnung des Strömungsquerschnittes möglich ist.

Der US 4 941 508 A ist ein kraftausgeglichener, hydraulischer Kraftschieber zu entnehmen. Der Kolben des Kraftschiebers weist eine Steuernut auf, in welche das Hydraulikfluid über Kerben gedrosselt hineinströmen kann. Das Hydraulikfluid wird mittels einer Teilungskante auf einer gegenüberliegenden Seite der Steuernut in zwei Komponenten geteilt, so dass eine Kraft auf eine Kolbenfläche ausgeglichen wird.

### Offenbarung der Erfindung

Aufgabe der Erfindung ist es daher, ein hydraulisches Wegeventil zu schaffen, welches eine Reduzierung der Strömungskräfte und Minimierung der Versorgungsdruckabhängigkeit ermöglicht.

Die vorgenannte Aufgabe wird gelöst mit den Merkmalen des unabhängigen Anspruchs 1.

Ein erfindungsgemäßes hydraulisches Wegeventil umfasst ein Ventilgehäuse mit einer das Ventilgehäuse in Richtung deren Längsachse axial durchdringenden Aufnahmeöffnung, wobei das Ventilgehäuse eine erste Durchströmöffnung eines Versorgungsanschlusses, eine zweite Durchströmöffnung eines ersten Arbeitsanschlusses, eine dritte Durchströmöffnung eines zweiten Arbeitsanschlusses, eine vierte Durchströmöffnungen eines ersten Tankanschlusses und eine fünfte Durchströmöffnung eines zweiten Tankanschlusses aufweist. Die Durchströmöffnungen sind zumindest teilweise von einem das Ventilgehäuse durchströmenden Hydraulikfluid durchströmbar ausgebildet. Des Weiteren umfasst das Wegeventil einen im Ventilgehäuse in der Aufnahmeöffnung entlang der Längsachse axial verschiebbaren Kolben mit einer ersten Steuernut und eine Verschiebevorrichtung zur axialen Verschiebung des Kolbens. Mit Hilfe der Verschiebevorrichtung ist die erste Steuernut relativ zu den Durchströmöffnungen positionierbar, wobei die Verschiebevorrichtung ein bestrombares erstes Verschiebeteil und ein druckbeaufschlagtes zweites Verschiebeteil aufweist, die mit im Betrieb auftretenden Strömungskräften des Hydraulikfluids zusammenwirkend ausgebildet sind. Zur Kompensation der Strömungskräfte des Hydraulikfluids weist der Kolben ein Kompensationselement auf. Dadurch, dass der Kolben das Kompensationselement aufweist, ist die Möglichkeit gegeben, eine Kompensation störender Strömungskräfte unmittelbar am Kolben, auf welchen auch die Magnetkraft und die Federkraft wirken, herbeizuführen. Somit muss nicht ein aufwendiger und teurer Entwicklungsprozess zur Herstellung bspw. eines neuen Ventilgehäuses durchgeführt werden. Erfindungsgemäß weist die erste Steuernut das Kompensationselement auf. An dieser ersten Steuernut greifen Strömungskräfte des Hydraulikfluids an, welche durch einen bestimmten Versorgungsdruck zur Versorgung der Arbeitsanschlüsse hervorgerufen werden. Somit kann insbesondere an der ersten Steuernut unmittelbar auf die störenden Strömungskräfte durch Ausbildung des Kompensationselementes Einfluss genommen werden.
Der ersten Steuernut, welche eine dem ersten Verschiebeteil zugewandt ausgebildete erste Steuerkante und einem dem zweiten Verschiebeteil zugewandt ausgebildete zweite Steuerkante aufweist, ist das Kompensationselement im Bereich der zweiten Steuerkante zugeordnet.

Erfindungsgemäß ist eine Elementkante des Kompensationselementes, welche der ersten Durchströmöffnung zugewandt ausgebildet, bei einem maximal offenen Querschnitt, von einer dritten Steuerkante der zweiten Durchströmöffnung, welche auf einer der ersten Durchströmöffnung zugewandten Seite der zweiten Durchströmöffnung ausgebildet ist, mit einer in Richtung der ersten Steuerkante ausgerichteten axialen zweiten Länge beabstandet ist. Hierdurch kann eine weitere Steigerung der Strömungskompensation erzielt werden.

Bevorzugt ist das Kompensationselement in Form einer Drossel ausgeführt. Damit lassen sich, insbesondere sofern die Drossel im Bereich der zweiten Steuerkante ausgebildet ist, Strömungskräfte und insbesondere störende Strömungskräfte reduzieren und möglicherweise vollständig aufzuheben. Das Kompensationselement kann unterschiedliche Profile, welche zur Reduzierung eines an der zweiten Steuerkante auszubildenden Strömungsquerschnitts geeignet sind, aufweisen. Eine absatzartige Ausgestaltung des Kompensationselements hat sich in fertigungstechnischer Hinsicht als kostengünstig erwiesen.

In einer weiteren Ausgestaltung ist in radialer Richtung zwischen dem Kompensationselement und der zweiten Steuerkante ein erster Radialabstand ausgebildet, welcher sich in die Richtung des Ventilgehäuses erstreckt, und/oder das Kompensationselement weist einen zweiten Durchmesser auf, welcher kleiner ist als ein erster Durchmesser der zweiten Steuerkante. Mit Hilfe dieses ersten Radialabstandes und/oder mit Hilfe des kleineren zweiten Durchmessers des Kompensationselements ist bei Durchströmung der ersten Steuernut ausgehend von der ersten Durchströmöffnung in die zweite Durchströmöffnung eine Drosselstelle ausgebildet, mit deren Hilfe die Strömungskompensation herbeigeführt wird.

Eine Steigerung der Strömungskompensation ist bei der Ausbildung des Kompensationselementes realisiert, dessen sich in Richtung der Längsachse erstreckende erste Länge größer ist als der erste Radialabstand und/oder größer ist als die Hälfte der Differenz des ersten Durchmessers und des zweiten Durchmessers.

In einer weiteren Ausgestaltung des erfindungsgemäßen hydraulischen Wegeventils weist die erste Steuernut im Bereich der ersten Steuerkante einen Absatz auf. Mit Hilfe des Absatzes ist neben einer erzielten weiteren zusätzlichen Steigerung der Strömungskompensation das Wegeventil fertigungstechnisch kostengünstig herzustellen.

Insbesondere ist eine weitere zusätzlich Steigerung der Strömungskompensation herbeizuführen bei der Ausbildung des Absatzes mit einem dritten Durchmesser, welcher zumindest gleich oder insbesondere kleiner ist als der zweite Durchmesser und/oder in radialer Richtung zwischen ersten Steuerkante und dem Absatz ein zweiter Radialabstand ausgebildet ist, welcher größer ist als der erste Radialabstand.

Günstige Ausgestaltungen und Vorteile der Erfindung ergeben sich aus den weiteren Ansprüchen, der Beschreibung und der Zeichnung.

### Kurze Beschreibung der Zeichnungen

In den Zeichnungen ist ein einziges Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein erfindungsgemäßes hydraulisches Wegeventil im Längsschnitt in einer zweiten Schaltstellung;
- Fig. 2: einen vergrößerten Ausschnitt Z des Wegeventils gem. Fig. 1 in der zweiten Schaltstellung;
- Fig. 3: den vergrößerten Ausschnitt Z des Wegeventils gem. Fig. 1 in einer ersten Schaltstellung mit Strömungslinien eines Hydraulikfluids ;
- Fig. 4: eine Q-I-Kennlinie eines Wegeventils gemäß dem Stand der Technik ohne Strömungskraftkompensation;
- Fig. 5: eine Q-I-Kennlinie bei verschiedenen Versorgungsdrücken eines Wegeventils gemäß dem Stand der Technik ohne Strömungskraftkompensation ;
- Fig. 6: eine Q-I-Kennlinie eines erfindungsgemäßen Wegeventils mit einer Strömungskraftkompensation; und
- Fig. 7: eine Q-I-Kennlinie bei verschiedenen Versorgungsdrücken des erfindungsgemäßen Wegeventils mit einer Strömungskraftkompensation.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen. Aus Gründen der Übersichtlichkeit ist es möglich, dass die Komponenten nicht in allen Figuren mit ihrem Bezugszeichen versehen sind, ohne jedoch ihre Zuordnung zu verlieren.

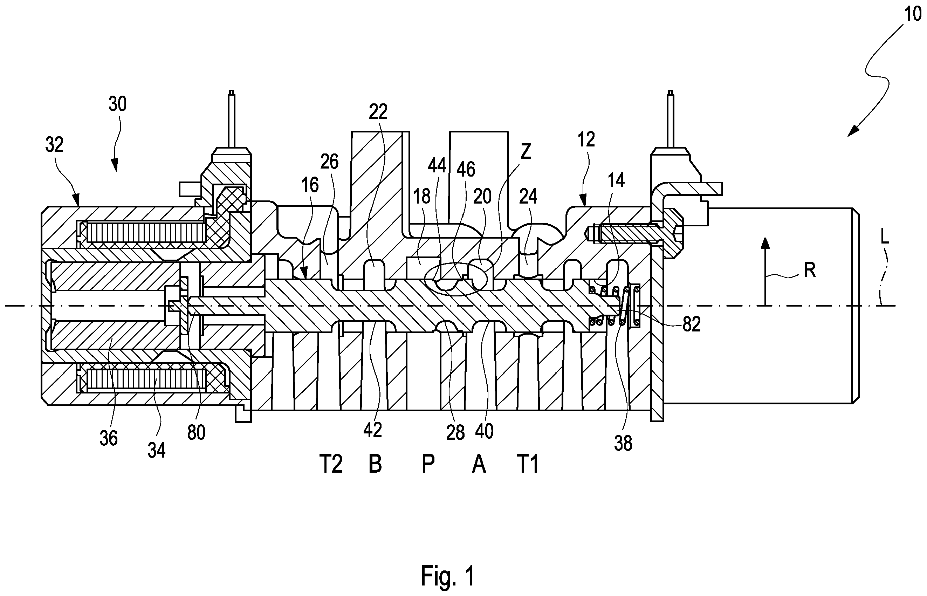

Fig. 1 zeigt einen Längsschnitt eines erfindungsgemäßen hydraulischen Wegeventils 10. Dieses umfasst ein Ventilgehäuse 12, in dessen Aufnahmeöffnung 14 ein Kolben 16 entlang einer Längsachse L des Ventilgehäuses 12 längsverschiebbar angeordnet ist.

Das Ventilgehäuse 12 umfasst weiter eine erste Durchströmöffnung 18, welche einem Versorgungskanal P zum Zuführen eines Hydraulikfluids, eine zweite Durchströmöffnung 20, welche einem ersten Arbeitsanschluss A zum Zuführen des Hydraulikfluids zum ersten Verbraucher, eine dritte Durchströmöffnung 22, welche einem zweiten Arbeitsanschluss B zum Zuführen des Hydraulikfluids zum zweiten Verbraucher, eine vierte Durchströmöffnung 24, welche einem ersten Tankanschluss T1 zum Ableiten des Hydraulikfluids aus dem ersten Verbraucher und eine fünfte Durchströmöffnung 26, welche einem zweiten Tankanschluss T2 zum Ableiten des Hydraulikfluids aus dem zweiten Verbraucher zugeordnet ist.

Der Kolben 16 weist eine erste Steuernut 28 auf, die in Form einer Ringnut ausgeführt ist. Mit Hilfe der ersten Steuernut 28 können die erste Durchströmöffnung 18 und die zweite Durchströmöffnung 20 geöffnet oder geschlossen werden, wobei eine Strömung des Hydraulikfluids eingestellt werden kann. Zum Öffnen oder Schließen der Durchströmöffnungen 18, 20 wird der Kolben 16 mit Hilfe einer Verschiebevorrichtung 30 axial verschoben.

Weiterhin weist der Kolben 16 eine umlaufende zweite Steuernut 40 auf, die den den ersten Arbeitsanschluss A mit dem ersten Tankanschluss T1 verbindet, sofern die erste Steuernut 28 einen zwischen der ersten Steuernut 28 und der zweiten Steuernut 40 ausgebildeten Strömungsweg schließt. Eine umlaufende dritte Steuernut 42 verbindet den zweiten Arbeitsanschluss B mit dem Versorgungsanschluss P oder wahlweise mit dem zweiten Tankanschluss T2. Fig. 1 zeigt eine Ausgangsstellung des Wegeventils 1, in welcher der zweite Arbeitsanschluss B mit dem zweiten Tankanschluss T2 verbunden und der erste Arbeitsanschluss A zum Versorgungsanschluss P sowie zum ersten Tankanschluss T1 gesperrt ist.

Die Verschiebevorrichtung 30 umfasst ein bestrombares erstes Verschiebeteil 32 in Form eines Magnetaktors mit einem von einer bestrombaren Spule 34 umfassten Magnetankers 36 und ein nichtbestrombares zweites Verschiebeteil 38, welches als Federelement, in diesem Ausführungsbeispiel in Form einer Spiralfeder, ausgebildet ist und sich am Ventilgehäuse 12 abstützt. Das erste Verschiebeteil 32 ist an einem ersten Ende 80 des Ventilkolbens 16 und das zweite Verschiebeteil 38 an einem vom ersten Ende 80 abgewandt ausgebildeten zweiten Ende 82 des Ventilkolbens 16 angeordnet.

Mit Hilfe der Verschiebevorrichtung 30 wird der Kolben 16 im Betrieb des Wegeventils 10 so positioniert, dass mit Hilfe der Steuernut 28 ein Durchfluss des Hydraulikfluids ausgehend von der ersten Durchströmöffnung 18 in die zweite Durchströmöffnung 20 realisiert werden kann. Sofern das Hydraulikfluid ausgehend von der ersten Durchströmöffnung 18 in die zweite Durchströmöffnung 20 fließen kann, befindet sich das Wegeventil 10 in einer ersten Schaltstellung, wobei in der ersten Schaltstellung Hydraulikfluid ausgehend von der dritten Durchströmöffnung 22 in die fünfte Durchströmöffnung 26 abfließen kann. In einer zweiten Schaltstellung befindet es sich, wenn die erste Durchströmöffnung 18 geschlossen ist.

Das Wegeventil 10 weist eine dritte Schaltstellung auf, in der die dritte Steuernut 42 die erste Durchströmöffnung 18 mit der dritten Durchströmöffnung 22 durchströmbar verbindet. In dieser dritten Schaltstellung kann Hydraulikfluid ausgehend von der zweiten Durchströmöffnung 20 in die vierte Durchströmöffnung 24 abfließen. Somit ist der Kolben 16 mit dem Federelement 38, das eine Federkraft aufbringt, und mit dem Magnetaktor 32, der zum Aufbringen einer Magnetkraft vorgesehen ist, längsverschiebbar gekoppelt. Im Betrieb des Hydraulikventils 10 wird ein am Kolben 16 angreifendes Kräftegleichgewicht zwischen einer durch den Magnetaktor 32 induzierten Magnetkraft, einer Federkraft des Federelementes 38 sowie anliegender Strömungskräfte des Hydraulikfluids angestrebt.
Aufgrund des Fluidstromes, welcher durch aktives Öffnen und Schließen der Durchströmöffnungen 18, 20, 22, 24, 26 mit Hilfe des durch die Verschiebevorrichtung 30 bewegbaren Kolbens 16 geregelt ist, treten im Wegeventil 10 unerwünschte Strömungskräfte, so genannte Störkräfte des Hydraulikfluids am Kolben 16 auf, die das angestrebte Kräftegleichgewicht stören und beeinflussen.

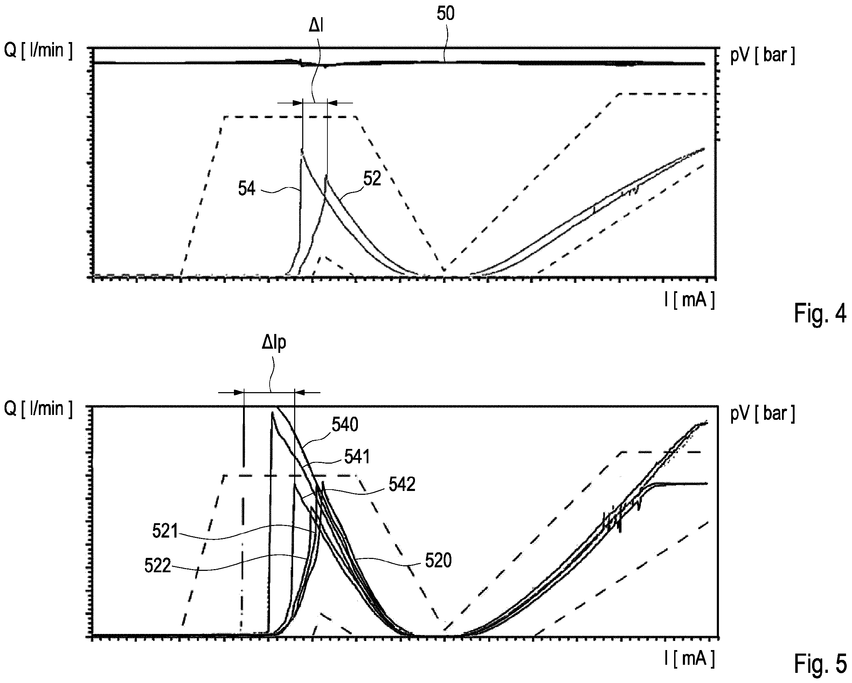

Fig. 4 zeigt eine Q-I-Kennlinie eines bekannten Wegeventils 10 ohne Strömungskraftkompensation, mit anderen Worten ohne Reduzierung oder Eliminierung der Störkräfte, bei einem gleichbleibenden Versorgungsdruck pV, wobei Q einem Volumenstrom des Hydraulikfluids und I einer angelegten Stromstärke entspricht, welcher durch die Versorgungsdrucklinie 50 dargestellt ist. Es ist :ersichtlich, dass sich eine Einfahrkennlinie 52 deutlich von einer Ausfahrkennlinie 54 unterscheidet. Mit anderen Worten bedeutet dies, dass, je nach Bewegung des Kolbens 16, in Richtung des ersten Arbeitsanschlusses A oder in Richtung des zweiten Arbeitsanschlusses B, zur Erzielung eines gleichen Volumenstromes Q eine unterschiedliche Strömstärke I am ersten Verschiebeteil 32anzulegen ist.

In Fig. 5 sind die Q-I-Kennlinien des bekannten Wegeventils 10 ohne Strömungskraftkompensation bei unterschiedlichen Versorgungsdrücken pV dargestellt, wobei eine Einfahrkennlinie 520 bzw. eine Ausfahrkennlinie 540 die Q-I-Kennlinie bei einem Versorgungsdruck pV in Höhe von 30bar, eine Einfahrkennlinie 521 bzw. eine Ausfahrkennlinie 541 die Q-I-Kennlinie bei einem Versorgungsdruck in Höhe von 10bar und eine Einfahrkennlinie 522 bzw. eine Ausfahrkennlinie 542 die Q-I-Kennlinie bei einem Versorgungsdruck in Höhe von 20bar kennzeichnen. Es ist deutlich, dass der Störfaktor wesentlich von dem Versorgungsdruck pV abhängt.

Um eine Reduzierung oder Eliminierung der Störfaktoren und Minimierung der Versorgungsdruckabhängigkeit herbeizuführen, die durch eine Strömungskraftkompensation zu realisieren sind, weist der Kolben 16 ein Kompensationselement 60 auf, welches der ersten Steuernut 28 zugeordnet ist. Mit anderen Worten weist die erste Steuernut 28 zur Kompensation von Strömungskräften, die die Reduzierung oder Eliminierung der Störfaktoren herbeiführt, eine strömungskraftkompensierte Steuerkantengeometrie auf.

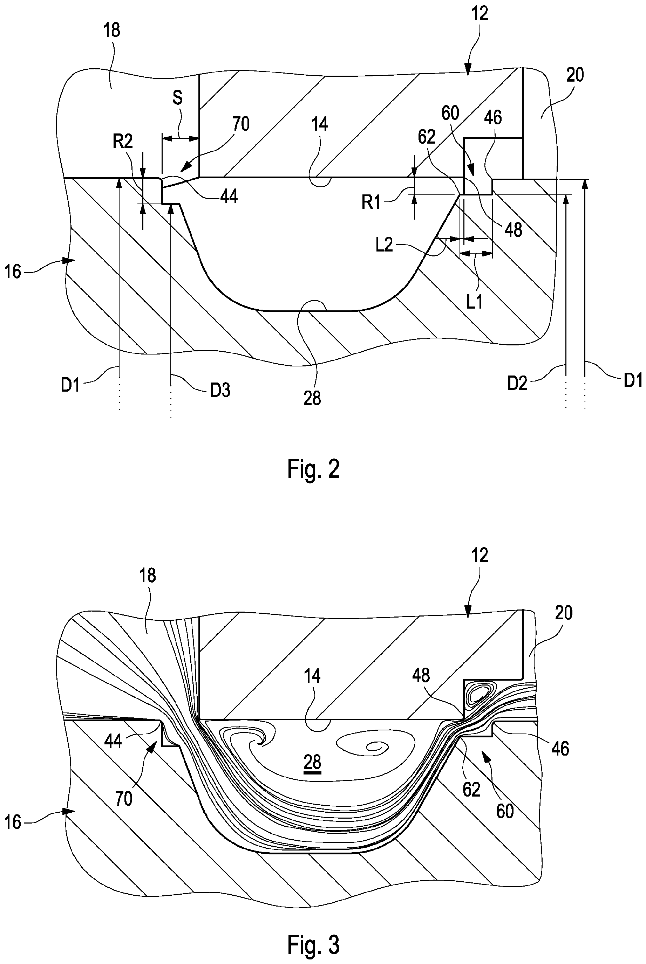

Wie Fig. 2 zu entnehmen ist, welche den vergrößerten Ausschnitt Z des erfindungsgemäßen Wegeventils 10 in der zweiten Schaltstellung zeigt, weist die erste Steuernut 28 eine dem ersten Verschiebeteil 32 zugewandt ausgebildete erste Steuerkante 44 auf, wobei die erste Steuerkante 44 in dem dargestellten Ausführungsbeispiel der ersten Durchströmöffnung 18 des Versorgungsanschlusses P zugeordnet ist. Eine zweite Steuerkante 46 der ersten Steuernut 28 ist dem zweiten Verschiebeteil 38 zugewandt angeordnet, wobei die zweite Steuerkante 46 der zweiten Durchströmöffnung 20 des Arbeitsanschlusses A zugeordnet ist. Zur Strömungskraftkompensierung der Steuerkantengeometrie ist im Bereich der zweiten Steuerkante 46 eine Drosselstelle vorgesehen, welche in Form des als Drossel ausgestalteten Kompensationselements 60 ausgeführt ist.

Das Kompensationselement 60 ist absatzartig ausgestaltet, wobei in radialer Richtung R zwischen dem Kompensationselement 60 und der zweiten Steuerkante 46 ein erster Radialabstand R1 ausgebildet ist. Im dargestellten Ausführungsbeispiel, welches eine ringnutförmige erste Steuernut 28 zeigt, kann aufgrund einer rotationssymmetrischen Ausführung des Kolbens 16 das Kompensationselement 60 auch mittels Durchmesser D1, D2 des Kolbens 16 beschrieben werden, wobei ein erster Durchmesser D1 der zweiten Steuerkante 46 größer ist als ein zweiter Durchmesser D2 des Kompensationselementes 60. Wäre die erste Steuernut 28 auch in einer von einer Ringnut abweichenden Form ausgeführt, ist zur Beschreibung des Kompensationselementes 60 der erste Radialabstand R1 heranzuziehen.

Eine in Richtung der Längsachse L ausgebildete erste Länge L1 des Kompensationselementes 60 ist im dargestellten Ausführungsbeispiel größer als die Hälfte der Differenz des ersten Durchmessers D1 und des zweiten Durchmessers D2. Wäre die erste Steuernut 28 nicht als Ringnut ausgeführt, ist die erste Länge L1 größer ist als der radiale erste Abstand R1.

Fig. 3, welche die erste Steuernut 28 des erfindungsgemäßen Wegeventils 10 mit Strömungslinien des Hydraulikfluids in der ersten Schaltstellung zeigt, ist zu entnehmen, dass mit Hilfe des Kompensationselementes 60 eine Drosselung und dadurch eine Strömungskraftkompensierung erzielt ist.

Das Kompensationselement 60 besitzt eine Elementkante 62, die zwischen der ersten Steuerkante 44 und der zweiten Steuerkante 46 positioniert ist. Diese Elementkante 62 ist so positioniert, dass bei einer maximalen Öffnung eines an der ersten Steuerkante 44 ausgebildeten Strömungsquerschnitts S zwischen einer dritten Steuerkante 48 der zweiten Durchströmöffnung 20, die der ersten Durchströmöffnung 18 zugewandt angeordnet ist, ein Abstand zwischen der Elementkante 62 und der dritten Steuerkante 48 vorliegt, welcher eine zweite Länge L2 aufweist. Der Abstand ist hier als Überdeckung ausgeführt. Das heißt mit anderen Worten, dass zwischen der Elementkante 62 und der dritten Steuerkante 48 eine weitere Drosselstelle ausgeführt ist. Dies ist ebenfalls der Fig. 3 zu entnehmen.
Ein Absatz 70 der ersten Steuernut 28 ist im Bereich der ersten Steuerkante 44 ausgebildet. Der Absatz 70 weist einen dritten Durchmesser D3 auf. Der dritte Durchmesser D3 kann gleich oder kleiner dem zweiten Durchmesser D2 sein, wie in Fig. 2 bzw. Fig. 3 dargestellt ist. Sofern die erste Steuernut 28 nicht in Form einer Ringnut ausgestaltet ist, ist ein zwischen der ersten Steuerkante 44 und dem Absatz 70 ausgebildeter zweiter Radialabstand R2 gleich oder größer dem ersten Radialabstand R1 auszuführen.

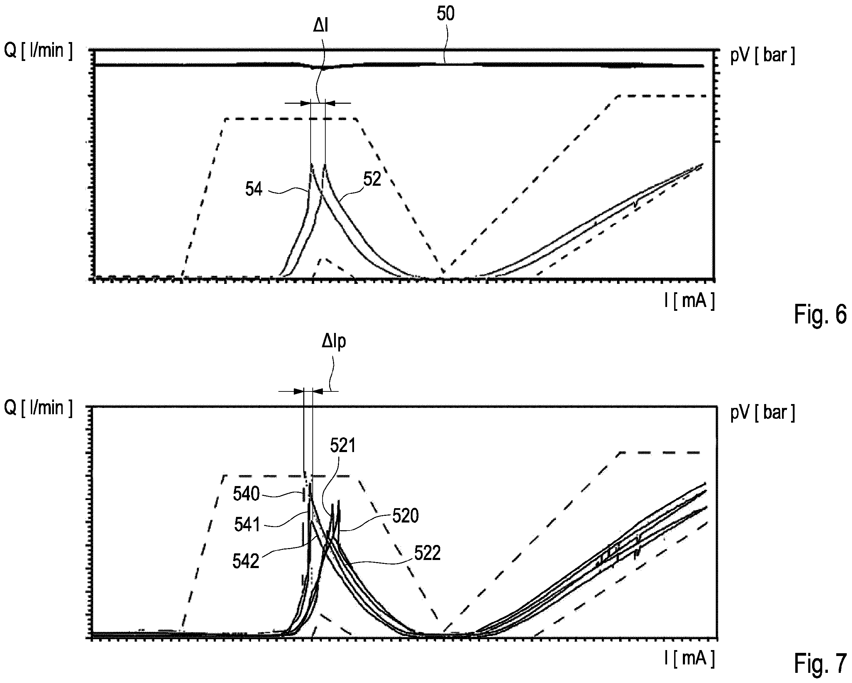

In Fig. 6 sind Q-I-Kennlinien des erfindungsgemäßen Wegeventils 10 bei einem dem in Fig. 4 entsprechenden Versorgungsdruck pV dargestellt. Ein zwischen der Einfahrkennlinie 52 und der Ausfahrkennlinie 54 ausgebildeter, so genannter Hystereseabstand ΔI ist im Vergleich mit dem Hystereseabstand ΔI des Wegeventils 10 des Standes der Technik wesentlich reduziert. Ebenso ist der Volumenstrom Q bei dem dargestellten Versorgungsdruck pV für beide Kennlinien 52, 54 identisch.
Fig. 7 zeigt Q-I-Kennlinien des erfindungsgemäßen Wegeventils 10 mit den unterschiedlichen Versorgungsdrücken pV in Höhe von 10bar, 20bar und 30bar. Ebenfalls kann mit Hilfe des erfindungsgemäßen Wegeventils 10 eine Versorgungsdruckabhängigkeit der für einen bestimmten Volumenstrom Q anzulegenden Stromstärke I weitestgehend reduziert werden, wie ein Vergleich eine Versorgungsdruckdifferenz ΔIp der in Fig. 5 dargestellten Kennlininen mit den in Fig. 7 dargestellten Kennlinien zeigt.

Es ist ersichtlich, dass die Nachteile des Wegeventils 10 des Standes der Technik durch das erfindungsgemäße Wegeventil 10 weitgehend reduziert werden können.

## Patentansprüche

1. Hydraulisches Wegeventil (10) umfassend
- ein Ventilgehäuse (12) mit einer das Ventilgehäuse (12) in Richtung deren Längsachse (L) axial zumindest teilweise durchdringenden Aufnahmeöffnung (14), wobei das Ventilgehäuse (12) eine erste Durchströmöffnung (18) eines Versorgungsanschlusses (P), eine zweite Durchströmöffnung (20) eines ersten Arbeitsanschlusses (A), eine dritte Durchströmöffnung (22) eines zweiten Arbeitsanschlusses (B), eine vierte Durchströmöffnungen (24) eines ersten Tankanschlusses (T1) und eine fünfte Durchströmöffnung (26) eines zweiten Tankanschlusses (T2) aufweist, wobei die Durchströmöffnungen (18, 20, 22, 24, 26) zumindest teilweise von einem das Ventilgehäuse (12) durchströmenden Hydraulikfluid durchströmbar ausgebildet sind,
- ein im Ventilgehäuse (12) in der Aufnahmeöffnung (14) entlang der Längsachse (L) axial verschiebbaren Kolben (16) mit einer ersten Steuernut (28),
- eine Verschiebevorrichtung (30) zur axialen Verschiebung des Kolbens (16), wobei mit Hilfe der Verschiebevorrichtung (30) die erste Steuernut (28) relativ zu den Durchströmöffnungen (18, 20, 22, 24, 26) positionierbar ist, und wobei die Verschiebevorrichtung (30) ein bestrombares erstes Verschiebeteil (32) und ein druckbeaufschlagtes zweites Verschiebeteil (38) aufweist, die mit im Betrieb auftretenden Strömungskräften des Hydraulikfluids zusammenwirkend ausgebildet sind,
wobei
zur Kompensation der Strömungskräfte des Hydraulikfluids die erste Steuernut (28) ein Kompensationselement (60) aufweist, wobei die erste Steuernut (28) eine dem ersten Verschiebeteil (32) zugewandt ausgebildete erste Steuerkante (44) und einem dem zweiten Verschiebeteil (38) zugewandt ausgebildete zweite Steuerkante (46) aufweist, wobei das Kompensationselement (60) im Bereich der zweiten Steuerkante (46) ausgestaltet ist, wobei eine Elementkante (62) des Kompensationselementes (60), welche der ersten Durchströmöffnung (18) zugewandt ausgebildet ist, bei einem maximal an der ersten Steuerkante (44) ausgebildeten offenen Strömungsquerschnitt (S), von einer an dem Ventilgehäuse (12) ausgebildeten dritten Steuerkante (48) der zweiten Durchströmöffnung (20), welche auf einer der ersten Durchströmöffnung (18) zugewandten Seite der zweiten Durchströmöffnung (20) ausgebildet ist, mit einer in Richtung der ersten Steuerkante (44) ausgerichteten axialen zweiten Länge (L2) beabstandet ist.

2. Hydraulisches Wegeventil nach Anspruch 1,
**dadurch gekennzeichnet, dass**
das Kompensationselement (60) in Form einer Drossel ausgeführt ist.

3. Hydraulisches Wegeventil nach einem der vorhergehenden Ansprüche,
**dadurch gekennzeichnet, dass**
das Kompensationselement (60) absatzartig ausgestaltet ist.

4. Hydraulisches Wegeventil nach einem der Ansprüche 1 bis 3,
**dadurch gekennzeichnet, dass**
in radialer Richtung (R) zwischen dem Kompensationselement (60) und der zweiten Steuerkante (46) ein erster Radialabstand (R1) ausgebildet ist, welcher sich in Richtung des Ventilgehäuses (12) erstreckt, und/oder das Kompensationselement (60) einen zweiten Durchmesser (D2) aufweist, welcher kleiner ist als ein erster Durchmesser (D1) der zweiten Steuerkante (46).

5. Hydraulisches Wegeventil nach Anspruch 4,
**dadurch gekennzeichnet, dass**
eine in Richtung der Längsachse (L) ausgebildete erste Länge (L1) des Kompensationselementes (60) größer ist als die Hälfte der Differenz des ersten Durchmessers (D1) und des zweiten Durchmessers (D2) und/oder größer ist als der radiale erste Abstand (R1).

6. Hydraulisches Wegeventil nach einem der Ansprüche 1 bis 5, **dadurch gekennzeichnet, dass**
die erste Steuernut (28) im Bereich der ersten Steuerkante (44) einen Absatz (70) aufweist.

7. Hydraulisches Wegeventil (1) nach Anspruch 6,
**dadurch gekennzeichnet, dass**
der Absatz (70) einen dritten Durchmesser (D3) aufweist, welcher gleich oder kleiner ist als der zweite Durchmesser (D2) und/oder in radialer Richtung (R) zwischen ersten Steuerkante (44) und dem Absatz (70) ein zweiter Radialabstand (R2) ausgebildet ist, welcher größer ist als der erste Radialabstand (R1).

## Claims

1. Hydraulic directional valve (10) comprising
- a valve housing (12) with a receiving opening (14) which penetrates the valve housing (12) at least partially axially in the direction of its longitudinal axis (L), the valve housing (12) having a first throughflow opening (18) of a supply connector (P), a second throughflow opening (20) of a first working connector (A), a third throughflow opening (22) of a second working connector (B), a fourth throughflow opening (24) of a first tank connector (T1) and a fifth throughflow opening (26) of a second tank connector (T2), the throughflow openings (18, 20, 22, 24,- 26) being configured such that they can be flowed through at least partially by a hydraulic fluid which flows through the valve housing (12),
- a piston (16) with a first control groove (28), which piston (16) can be displaced axially along the longitudinal axis (L) in the receiving opening (14) in the valve housing (12),
- a displacement apparatus (30) for the axial displacement of the piston (16), it being possible for the first control groove (28) to be positioned relative to the throughflow openings (18, 20, 22, 24, 26) with the aid of the displacement apparatus (30), and the displacement apparatus (30) having an energizable first displacement part (32) and a pressurized second displacement part (38) which are configured so as to interact with flow forces of the hydraulic fluid which occur during operation,
the first control groove (28) having a compensation element (60) in order to compensate for the flow forces of the hydraulic fluid, the first control groove (28) having a first control edge (44) which is configured so as to face the first displacement part (32), and a second control edge (46) which is configured so as to face the second displacement part (38), the compensation element (60) being configured in the region of the second control edge (46), an element edge (62) of the compensation element (60), which element edge (62) is configured so as to face the first throughflow opening (18), being spaced apart, in the case of an open flow cross section (S) which is configured at a maximum at the first control edge (44), with an axial second length (L2) which is oriented in the direction of the first control edge (44) from a third control edge (48) of the second throughflow opening (20), which third control edge (48) is configured on the valve housing (12) and is configured on a side of the second throughflow opening (20), which side faces the first throughflow opening (18).

2. Hydraulic directional valve according to Claim 1, **characterized in that** the compensation element (60) is configured in the form of a throttle.

3. Hydraulic directional valve according to either of the preceding claims, **characterized in that** the compensation element (60) is of shoulder-like configuration.

4. Hydraulic directional valve according to one of Claims 1 to 3, **characterized in that** a first radial spacing (R1) is configured in the radial direction (R) between the compensation element (60) and the second control edge (46), which first radial spacing (R1) extends in the direction of the valve housing (12), and/or the compensation element (60) has a second diameter (D2) which is smaller than a first diameter (D1) of the second control edge (46).

5. Hydraulic directional valve according to Claim 4, **characterized in that** a first length (L1), configured in the direction of the longitudinal axis (L), of the compensation element (60) is greater than half the difference of the first diameter (D1) and the second diameter (D2) and/or is greater than the radial first spacing (R1).

6. Hydraulic directional valve according to one of Claims 1 to 5, **characterized in that** the first control groove (28) has a shoulder (70) in the region of the first control edge (44).

7. Hydraulic directional valve (1) according to Claim 6, **characterized in that** the shoulder (70) has a third diameter (D3), which third diameter is equal to or smaller than the second diameter (D2) and/or a second radial spacing (R2) is configured in the radial direction (R) between the first control edge (44) and the shoulder (70), which second radial spacing (R2) is greater than the first radial spacing (R1).

## Revendications

1. Soupape distributrice hydraulique (10) comprenant
- un corps de soupape (12) doté d'un orifice de logement (14) traversant au moins en partie le corps de soupape (12) axialement dans la direction de son axe longitudinal (L), le corps de soupape (12) comportant un premier orifice d'écoulement (18) d'un raccord d'alimentation (P), un deuxième orifice d'écoulement (20) d'un premier raccord de travail (A), un troisième orifice d'écoulement (22) d'un deuxième raccord de travail (B), un quatrième orifice d'écoulement (24) d'un premier raccord sur cuve (T1) et un cinquième orifice d'écoulement (26) d'un deuxième raccord sur cuve (T2) ; les orifices d'écoulement (18, 20, 22, 24, 26) étant conçus de manière à pouvoir être traversés au moins en partie par un fluide hydraulique circulant à travers le corps de soupape (12),
- un piston (16) déplaçable axialement dans le corps de soupape (12) dans l'orifice de logement (14), le long de l'axe longitudinal (L), doté d'une première rainure de commande (28),
- un dispositif de coulissement (30) pour le déplacement axial du piston (16), à l'aide du dispositif de coulissement (30), la première rainure de commande (28) étant positionnable par rapport aux orifices d'écoulement (18, 20, 22, 24, 26) et le dispositif de coulissement (30) comportant une première pièce coulissante (32) pouvant être alimentée et une deuxième pièce coulissante (38) soumise à une pression qui est conçue de manière à coopérer avec les forces d'écoulement du fluide hydraulique, produites en service,
pour la compensation des forces d'écoulement du fluide hydraulique, la première rainure de commande (28) comportant un élément de compensation (60), la première rainure de commande (28) comportant une première arête de commande (44) ménagée en faisant face à la première pièce coulissante (32) et une deuxième arête de commande (46) ménagée en faisant face à la deuxième pièce coulissante (38), l'élément de compensation (60) étant conçu dans la région de la deuxième arête de commande (46), lors d'une section transversale d'écoulement (S) d'ouverture maximale, produite sur la première arête de commande (44), une arête d'élément (62) de l'élément de compensation (60), laquelle est ménagée en faisant face au premier orifice d'écoulement (18) présentant un écart d'une deuxième longueur (L2) orientée axialement dans la direction de la première arête de commande (44) par rapport à une troisième arête de commande (48) du deuxième orifice d'écoulement (20), ménagée sur le corps de soupape (12), laquelle est ménagée sur un côté du deuxième orifice d'écoulement (20) qui fait face au premier orifice d'écoulement (18).

2. Soupape distributrice hydraulique selon la revendication 1, **caractérisée en ce que** l'élément de compensation (60) est réalisé sous la forme d'un étrangleur.

3. Soupape distributrice hydraulique selon l'une quelconque des revendications précédentes, **caractérisée en ce que** l'élément de compensation (60) est conçu sous la forme d'un talon.

4. Soupape distributrice hydraulique selon l'une quelconque des revendications 1 à 3, **caractérisée en ce que** dans la direction radiale (R), entre l'élément de compensation (60) et la deuxième arête de commande (46) est ménagé un premier écart radial (R1), lequel s'étend dans la direction du corps de soupape (12), et/ou l'élément de compensation (60) comporte un deuxième diamètre (D2), lequel est inférieur à un premier diamètre (D1) de la deuxième arête de commande (46).

5. Soupape distributrice hydraulique selon la revendication 4, **caractérisée en ce qu'**une première longueur (L1) de l'élément de compensation (60) réalisée dans la direction de l'axe longitudinal (L) est supérieure à la moitié de la différence entre le premier diamètre (D1) et le deuxième diamètre (D2) et/ou supérieure au premier écart radial (R1).

6. Soupape distributrice hydraulique selon l'une quelconque des revendications 1 à 5, **caractérisée en ce que** la première rainure de commande (28) comporte un talon (70) dans la région de la première arête de commande (44).

7. Soupape distributrice hydraulique (1) selon la revendication 6, **caractérisée en ce que** le talon (70) présente un troisième diamètre (D3), lequel est inférieur ou égal au deuxième diamètre (D2) et/ou dans la direction radiale (R), entre la première arête de commande (44) et le talon (70) est ménagé un deuxième écart radial (R2) qui est supérieur au premier écart radial (R1).
